# EUROPÄISCHE PATENTSCHRIFT

(11) **EP 3 575 618 B1**
(45) Veröffentlichungstag und Bekanntmachung des Hinweises auf die Patenterteilung: **13.09.2023**
(21) Anmeldenummer: 19176764.9
(22) Anmeldetag: 27.05.2019
(51) Int. Cl.: F16B 19/08, B21J 15/02, B21J 15/36, F16B 37/06, B23P 19/06

(54) **SELBSTSTANZENDES NIETELEMENT, ZUSAMMENBAUTEIL BESTEHEND AUS DEM NIETELEMENT UND EINEM BAUTEIL, VERFAHREN ZUR HERSTELLUNG DES ZUSAMMENBAUTEILS UND MATRIZE**
SELF-PIERCING RIVET ELEMENT, ASSEMBLY PART CONSISTING OF THE RIVET ELEMENT AND A COMPONENT, METHOD FOR PRODUCING THE ASSEMBLY PART AND DIE
ÉLÉMENT RIVET AUTOPERFORANT, COMPOSANT D'ASSEMBLAGE COMPOSÉ DE L'ÉLÉMENT RIVET ET D'UN COMPOSANT, PROCÉDÉ DE FABRICATION DU COMPOSANT D'ASSEMBLAGE ET MATRICE

(30) Priorität: 30.05.2018 DE 102018112964; 21.05.2019 DE 102019113560
(43) Veröffentlichungstag der Anmeldung: 04.12.2019
(73) Patentinhaber: Profil Verbindungstechnik GmbH & Co. KG, 61381 Friedrichsdorf (DE)
(72) Erfinder: Mahlme, Amer, 61352 Bad Homburg (DE)
(74) Vertreter: Manitz Finsterwald Patent- und Rechtsanwaltspartnerschaft mbB

(56) Entgegenhaltungen:
- EP-A1- 2 570 685
- DE-A1-102012 001 068
- US-A- 5 067 224
- US-A1- 2008 107 499

## Beschreibung

Die vorliegende Erfindung betrifft ein selbststanzendes Nietelement mit einer mittleren Längsachse, mit einem einen Gewindezylinder aufweisendes Körperteil und mit einem hohlen Nietabschnitt zum Eindrücken in ein ungelochtes Bauteil, wobei der Nietabschnitt zumindest bereichsweise als mittels einer Matrize aufweitbarer, sich in Richtung der mittleren Längsachse und vom Körperteil weg verjüngend ausgebildet ist. Ferner betrifft die Erfindung ein Zusammenbauteil bestehend aus dem Nietelement und einem Bauteil sowie ein Verfahren zum Anbringen des Nietelements an ein Bauteil und eine dafür geeignete Matrize.

Ein Nietelement der eingangs genannten Art ist der EP2570685 der vorliegenden Anmelderin zu entnehmen. Das dortige Nietelement ist zur selbststanzenden Anbringung an einem Bauteil aus Faserverbundmaterial vorgesehen. Die Bezeichnung "selbststanzend" bedeutet, dass der Nietabschnitt des Nietelements selbst zur Bildung des Loches im Bauteil durch die Ausübung eines geeigneten Drucks auf das Kopfteil des Nietelements bei Abstützung des Bauteils auf einer geeigneten Matrize verwendet wird, d.h. das Bauteil wird nicht vor der Anbringung des Nietelements im Bereich der Anbringung des Nietelements vorgelocht, obwohl es durchaus an anderer Stellen vorgelocht sein kann.

Bei der Ausführung des Nietabschnitts gemäß der EP2570685 ist, zur Realisierung der selbststanzenden Funktion, der Nietabschnitt als sich in Richtung einer Spitze verjüngender Dorn ausgebildet, wobei der Dorn an seiner Spitze eine, insbesondere trichterförmige, Einführhilfe für die eine eigene Spitze aufweisende und eine Aufweitung des Dorns bewirkende Matrize aufweist. Die Matrize hat seine eigene Spitze und ist ausgelegt, um den Dorn des Nietabschnitts durch eine Bewegung in die Einführhilfe hinein zu bewerkstelligen. Der Nietabschnitt weist einen im Wesentlichen kreisförmigen Querschnitt auf und besteht aus einer Mehrzahl von insbesondere zungenförmigen Segmenten, die gemeinsam den Dorn bilden und bei der Aufweitung des Dornes auseinander bewegbar sind. Durch die Ausbildung des Nietabschnitts als Dorn können bei der Anbringung des Nietelements an ein Bauteil aus Faserverbundmaterial die Fasern auseinandergedrückt werden, ohne sie schwer zu verletzen, wodurch die Festigkeit des Bauteils im Bereich der Anbringung begünstigt wird.

Das bekannte Nietelement ist allerdings nicht wirklich dafür geeignet mit Bauteilen aus Metall, d.h. mit Blechteilen, verwendet zu werden. Dies hat mehrere Gründe. Zum einen würde die erhebliche Blechumformung bzw. -verdrängung ein bedeutendes Problem darstellen, und zum anderen wird die Aufteilung des Nietabschnitts in Segmente die Festigkeit und die Ermüdungseigenschaften des so gebildeten Zusammenbauteils in Frage stellen.

Es ist zwar gelegentlich vorgeschlagen worden, ein Befestigungselement mit einem zylindrischen Nietabschnitt selbststanzend an ein Blechteil anzubringen, aber dies gelingt überzeugend mit Bolzenelementen wie die SBF-Bolzenelemente der Firma Profil Verbindungstechnik GmbH, ist aber bei Mutterelementen stets problematisch. Es sind zum Beispiel mehrere Vorschläge gemacht worden, ein RND-Mutterelement der Firma Profil Verbindungstechnik GmbH selbststanzend an ein Blechteil anzubringen, die Handhabung des entstehenden Stanzbutzens ist aber stets problematisch, da man einen nachlaufenden Stempel benötigt, um den Stanzbutzen aus dem Bereich des Mutterelements zu entfernen. Eine Entfernung durch den Gewindezylinder des Mutterelements hindurch ist recht problematisch, da der Stanzbutzen im Durchmesser größer ist als der Kerndurchmesser des Gewindezylinders und dieser somit beschädigt werden könnte.

Die US 5 067 224 A zeigt ein selbststanzendes Nietelement in Form eines Bolzenelements.

Aufgabe der vorliegenden Erfindung ist es ein selbststanzendes Nietelement vor-zusehen, bei dem es keine ausgeprägten Probleme mit der Entfernung des Stanzbutzens gibt und welche die Komplikation einen nachlaufenden Stempel vorsehen zu müssen vermeidet und dennoch eine hochwertige Anbindung an ein Bauteil insbesondere an ein Blechteil ermöglicht.

Zur Lösung dieser Aufgabe wird erfindungsgemäß ein Nietelement gemäß Anspruch 1 vorgesehen.

Bevorzugt hat der hohle Nietabschnitt im Bereich des Übergangs an den Körperteils seinen größten Durchmesser, wobei der Nietabschnitt an seinem freien Ende seinen kleinsten Durchmesser erreicht und dort eine kreisförmige Öffnung aufweist, wobei die Verjüngung des Nietzylinders einen eingeschlossenen Winkel im Bereich zwischen 20° und 100°, vorzugsweise zwischen 30° und 60° und insbesondere zwischen 40° und 50° aufweist.

Dabei ist das Nietelement ein Mutterelement mit einem Innengewinde, das zumindest im Wesentlichen koaxial zur mittleren Längsachse verläuft, wobei die Öffnung geringfügig kleiner als der Kerndurchmesser ausgebildet ist.

Bei der Realisierung des erfindungsgemäßen Nietelements wird das Nietelement üblicherweise an ein einziges Bauteil zur Bildung eines Zusammenbauteils angebracht, und der Gewindezylinder des Nietelements dient dann der Anbringung eines weiteren Bauteils an das Zusammenbauteil mittels eines Schraubbolzens, der in den Gewindezylinder geschraubt wird. Es ist allerdings nicht ausgeschlossen, dass das Mutterelement an zwei der mehreren Bauteile bzw. Blechteile selbststanzend angenietet wird.

Durch die erfindungsgemäße Ausbildung des Nietanschnitts als verjüngendes Teil mit einer kreisförmigen Öffnung bestimmt die Größe der Öffnung den Durchmesser des Stanzbutzens und sorgt dafür, dass es bei einem Mutterelement so klein gehalten werden kann, dass es problemlos durch den Gewindezylinder des Mutterelements hindurch entfernt werden kann. Dies kann, zum Beispiel, durch einen Luftstoß oder durch Schwerkraft erfolgen, wenn das Mutterelement bei der Anbringung unterhalb des Bauteils bzw. Blechteils angeordnet wird. Üblicherweise wird das Mutterelement in einem Setzkopf gehalten und der Setzkopf soll dann eine Passage aufweisen, die den Abtransport des Stanzbutzens ermöglicht nachdem dieses durch den Gewindezylinder hindurch entfernt worden ist.

Die Verwendung eines nachlaufenden Stempels zur Entfernung des Stanzbutzens ist nicht erforderlich, und die selbststanzende Anbringung des Nietelements an das Bauteil bzw. Blechteil erfolgt in einem Hub, der üblicherweise für die Anbringung der Nietelemente sorgende Presse. Eine Presse ist allerdings nicht zwingend erforderlich für die Anbringung des Nietelements. Hierfür könnte in an sich bekannter Weise auch ein Roboter oder eine mit Kraft betriebene Zange verwendet werden.

In einem Ausführungsbeispiel ist die Außenseite der Umfangswand des Nietabschnitts, in einer Längsebene geschnitten, zumindest im Wesentlichen konvex gerundet. Diese Formgebung lässt sich relativ leicht in einem Kaltschlagverfahren aus einem zunächst zylindrischen Nietabschnitt fertigen.

Alternativ kann die Außenseite der Umfangswand des Nietabschnitts zumindest im Wesentlichen konusförmig verlaufend ausgebildet werden. Eine solche Formgebung ist deutlich steifer und dies kommt der selbstanzenden Funktion des Nietabschnitts zu Gute..

Die Umfangswand des Nietabschnitts weist vorzugsweise bis auf den Übergang in das Kopfteil und an seinem freien Ende eine zumindest im Wesentlichen konstante Wanddicke auf.

Die Seite des Körperteils benachbart zum Übergang in den Nietabschnitt, ist als Flansch ausgebildet und kann mit Verdrehsicherungsmerkmalen versehen werden. Dies ist insbesondere günstig, wenn das Nietelement als Mutterelement oder als Bolzenelement realisiert ist.

Das erfindungsgemäße Zusammenbauteil besteht aus einem Nietelement nach einem der oben beschriebenen erfindungsgemäßen Arten in Kombination mit einem einem metallischen Bauteil bzw. einem Blechteil, wobei bei der Ausbildung als Mutterelement der durch die selbststanzende Einbringung des Nietelements im Bereich der Öffnung entstandene Stanzbutzen durch den hohlen Gewindezylinder entsorgt ist, und der Nietabschnitt zu einem Nietbördel umgeformt, wodurch das Nietelement an dem Bauteil fest angebracht ist. Dabei ist das Bauteil bzw. sind die Bauteile zwischen dem Nietbördel und einem durch das Körperteil gebildeten Flansch festgeklemmt.

Der zu einem Nietbördel umgeformte Nietabschnitt des Nietelements ist vorzugsweise in einer Sicke des Bauteils untergebracht, d.h. der Körperteil des Nietelements sitzt auf der erhabenen Seite der Sicke. Diese Ausbildung führt einerseits zu einer erwünschten Versteifung des Blechteils im Bereich der Anbringung des Nietelements und andererseits ist die Unterbringung des Nietbördels innerhalb der Sicke für die Anbausituation günstig, wenn bei einem Mutterelement ein weiteres Bauteil an das so gebildete Zusammenbauteil mittels eines Bolzens angebracht wird. Dabei soll der Nietbördel nur einen kleinen Abstand, beispielsweise 0,02 mm von der Ebene des Blechteils außerhalb der Sicke aufweisen, um eine planare Anschraubfläche für das weitere Bauteil zu schaffen.

Ein Verfahren zum Anbringen eines erfindungsgemäßen Nietelements an einem Bauteil bzw. Blechteil, unter Anwendung einer Matrize, die gegen das Bauteil gedrückt wird, zeichnet sich so aus, dass die Matrize mit einem mittleren Pfosten mit einem zylindrischen Bereich mit einem Außendurchmesser versehen ist, die dem Innendurchmesser der Öffnung entspricht und mit diesem bei der Ausübung von Druck auf das Nietelement in Richtung auf das Bauteil und die Matrize zugehend für das Ausstanzen eines Stanzbutzens sorgt, die innerhalb des Nietabschnitts gedrückt wird, dass der zylindrische Bereich des mittleren Pfostens von einem im Durchmesser vom zylindrischen Bereich weg divergierenden Bereich gefolgt ist, der für eine Aufweitung des hohlen Nietabschnitts sorgt, und dass der divergierende Bereich des mittleren Pfostens in eine U-förmige Vertiefung übergeht, die nach dem Durchstanzen des Bauteils und der Aufweitung des Nietabschnitts durch weitere Druckausübung auf dem Nietelement den Nietabschnitt zu einem Nietbördel umformt. Ein solches Verfahren ist leicht zu realisieren in einem Hub einer Presse und kommt ohne die Notwendigkeit eines nachlaufenden Stempels vorzusehen aus.

Besonders günstig ist es, wenn der Körperteil des Nietelements in einem Hohlraum eines Setzkopfes untergebracht ist, der über eine Vertiefung in der Form einer eine Sicke bildenden Mulde in die flache Stirnseite des Setzkopfes übergeht, wodurch durch die Ausübung von Druck auf das Nietelement mittels des Setzkopfes das Bauteil lokal in die Form einer Sicke umgeformt wird. Zu diesem Zweck geht die U-förmige Vertiefung auf seiner radial äußeren Seite vorzugsweise in eine die Vertiefung umgehende Ringerhebung über, die mit der Mulde des Setzkopfes für die Ausbildung der Sicke sorgt.

Die erfindungsgemäße Matrize zur selbststanzenden Anbringung eines erfindungsgemäßen Nietelements in ein Bauteil bzw. Blechteil, insbesondere zur Anwendung in ein oben beschriebenes Verfahren, zeichnet sich dadurch aus, dass die Matrize einen mittleren Pfosten mit einem zylindrischen Bereich mit einem Außendurchmesser versehen ist, der dem Innendurchmesser der Öffnung des Nietabschnitts des Nietelements entspricht und mit diesem bei der Ausübung von Druck auf das Nietelement in Richtung auf das Bauteil und die Matrize zugehend für das Ausstanzen eines Stanzbutzens sorgt, dass der zylindrische Bereich des mittleren Pfostens mit einem von einem im Durchmesser vom zylindrischen Bereich weg divergierenden Bereich gefolgt ist, der für eine Aufweitung des hohlen Nietabschnitts sorgt, und dass der divergierende Bereich des mittleren Pfostens in eine U-förmige Vertiefung übergeht, die nach dem Durchstanzen des Bauteils und der Aufweitung des Nietabschnitts durch weitere Druckausübung auf dem Nietelement den Nietabschnitt zu einem Nietbördel umformt. Dabei kann der mittlere Pfosten an seinem freien Stirnseite so ausgebildet werden, dass bei einem Bolzenelement oder bei einem reinen Niet der Stanzbutzen gegen den Boden des Kopfteils so gestaucht und hierdurch in seiner Querabmessungen vergrößert, dass der Stanzbutzen unverlierbar innerhalb des Nietabschnitts geklemmt ist.

Besonders günstig ist es, wenn die U-förmige Vertiefung auf seiner radial äußeren Seite in einer der Vertiefung umgehende Ringerhebung übergeht. Hierdurch kann eine saubere Formgebung der Sicke erreicht werden, da das Blechteil zur vollständigen Auskleidung der Mulde des Setzkopfes gebracht werden kann.

Die Erfindung wird nachfolgend anhand von Ausführungsbeispielen und unter Bezugnahme auf die Zeichnungen näher erläutert, in welchen zeigen:
- Fig. 1A: eine perspektivische Darstellung einer ersten Ausführungsform eines erfindungsgemäßen Nietelements in Form eines Mutterelements,
- Fig. 1B: eine teilweise in Längsrichtung geschnittene Seitenansicht des erfindungsgemäßen selbststanzenden Nietelements der Fig. 1A,
- Fig. 1C: eine halbierte Draufsicht in Längsrichtung des erfindungsgemäßen Nietelements auf dessen Nietabschnitt,
- Fig. 2A - C: Darstellungen entsprechend den Fig. 1A - C, jedoch von einer zweiten Ausführungsform des erfindungsgemäßen Nietelements, auch hier in der Form eines Mutterelements,
- Fig. 3A: eine Darstellung der Vorrichtung mit Setzkopf und Matrize zur Anbringung des erfindungsgemäßen Nietelements gemäß den Fig. 1A - 1C an ein Blechteil in der Anfangsphase der Anbringung,

- Fig. 3B -3 H: Figuren ähnlich der Fig. 3A jedoch in vereinfachter Form, welche verschiedene Phasen der selbststanzenden Anbringung des erfindungsgemäßen Nietelements gemäß Figs. 1A bis 1C an ein Blechteil darstellen,
- Fig. 4: eine Darstellung der Vorrichtung gemäß Fig. 3A mit Setzkopf und Matrize zur Anbringung des erfindungsgemäßen Nietelements gemäß den Fig. 1A -1C an ein Blechteil nach der Anbringung desselben an dem Blechteil, wobei Fig. 4 im Wesentlichen identisch ist mit der Fig. 3H jedoch alle Details der Fig. 3A zeigt,
- Fig. 5: eine teilweise in Längsrichtung geschnittene Seitenansicht des Zusammenbauteils, das in der Darstellung gemäß Fig. 4 entstanden ist,
- Fig. 6A - C: Darstellungen entsprechend den Fig. 2A - C jedoch von einer dritten Ausführungsform eines nicht erfindungsgemäßen selbststanzenden Nietelements, hier in der Form eines Bolzenelements und
- Fig. 7A - C: Darstellungen entsprechend der Fig. 2B, jedoch von drei verschiedenen weiteren Ausführungsformen eines nicht erfindungsgemäßen selbststanzenden Nietelements, hier in der Form eines Niets.

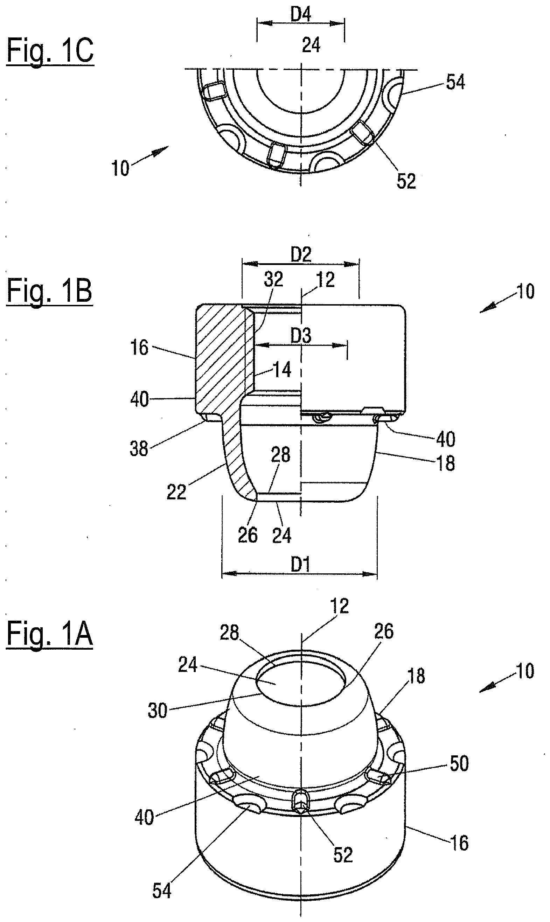

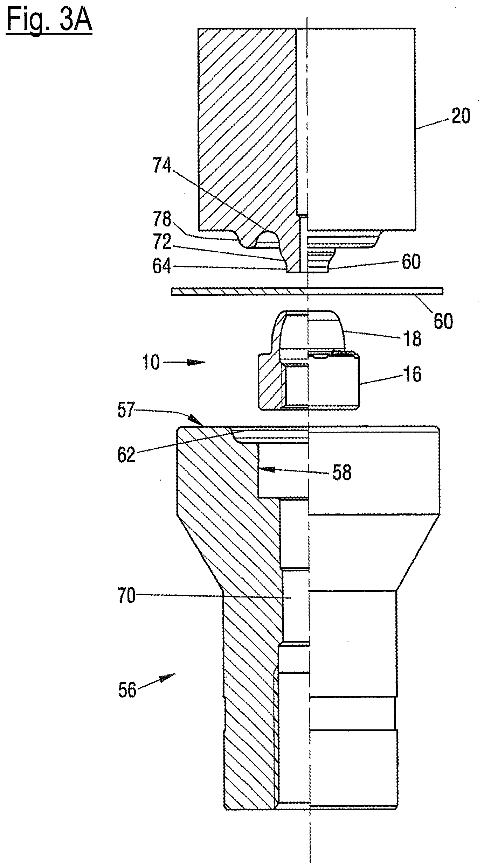

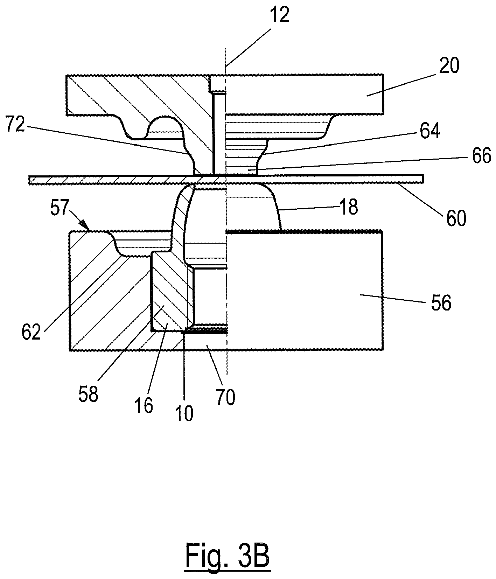

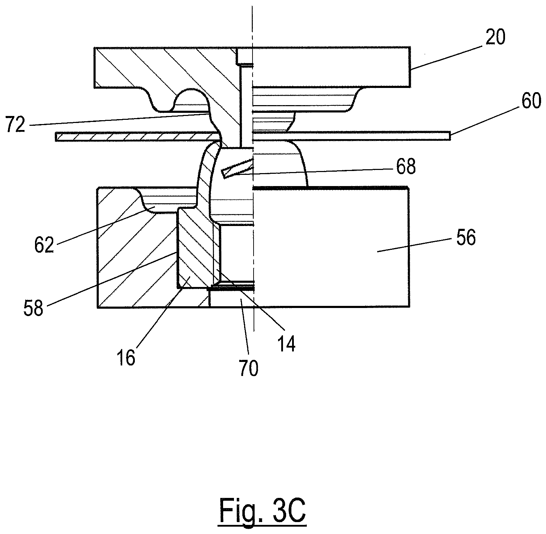

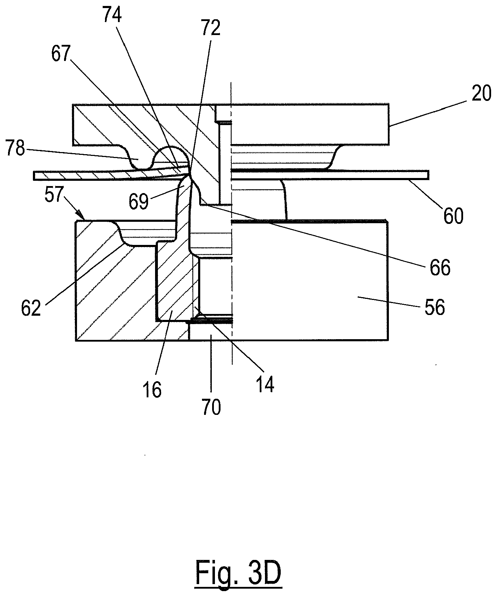

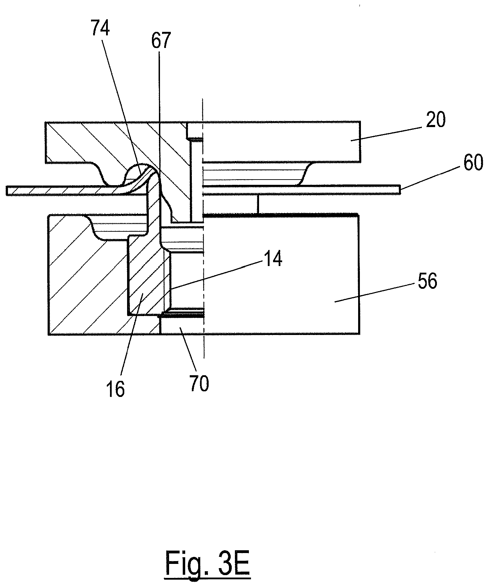

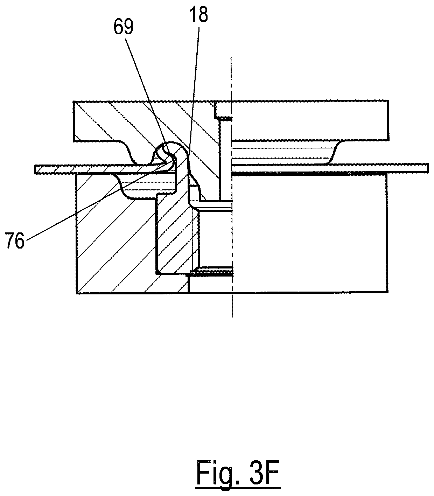

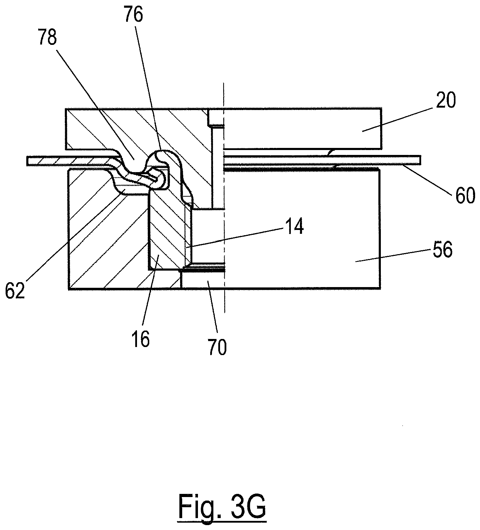

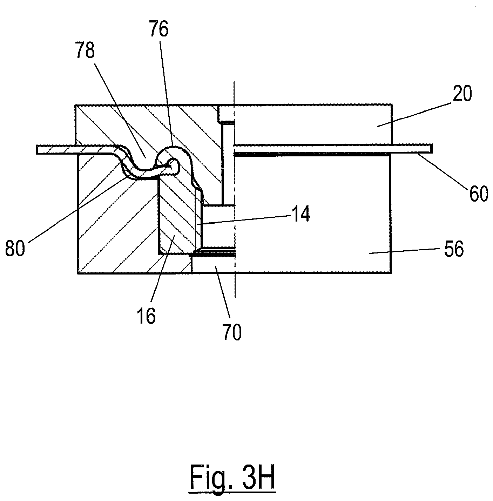

Bezug nehmend auf die Fig. 1A bis 1C wird dort ein selbststanzendes Nietelement 10 in der Form eines Mutterelements gezeigt mit einer mittleren Längsachse 12, mit einem einen Gewindezylinder 14 aufweisenden Körperteil 16 und mit einem hohlen Nietabschnitt 18 zum Eindrücken in ein ungelochtes Bauteil 60 (in den Fig. 3, 4 und 5 zu sehen). Der Nietabschnitt 18 ist zumindest bereichsweise mittels einer Matrize 20 (in Fig. 3A zu sehen) aufweitbar und verjüngt sich in Richtung der mittleren Längsachse und vom Körperteil weg. Mit der Bezeichnung "zumindest bereichsweise" ist gemeint, dass die Matrize nur im unteren Bereich des Nietabschnitts zu einer ausgeprägten Aufweitung dieser führen muss, da ein oberer Berteich fest im Bauteil steckt und nicht zu einem Nietbördel umgeformt wird. Damit einhergehend ist zu erwähnen, dass der Nietabschnitt nicht unbedingt auf seiner vollen Länge sich verjüngend ausgebildet sein muss, sondern auch ein zylindrischer Bereich konstanten Durchmessers aufweisen könnte, der benachbart zum Körperteil des Nietelements anzuordnen wäre, wobei im Regelfall die axiale Länge des sich verjüngenden Abschnitts größer ist, als die axiale Länge eines etwaigen zylindrischen Abschnitts.

Der hohle Nietabschnitt 18 weist im Bereich des Übergangs in den Körperteil 16 einen Durchmesser D1 auf, der größer als der Außendurchmesser D2 des Gewindezylinders 14 ist. Ferner hat der Nietabschnitt 18 eine geschlossene Umfangswand 22 und an seinem freien Ende eine Öffnung 24 mit einem Durchmesser D4, welcher zumindest im Wesentlichen dem Kerndurchmesser D3 des Gewindezylinders entspricht. Mit der Bezeichnung "geschlossene Umfangswand" ist gemeint dass die Umfangswand nicht durch Schlitze in Segmente oder Zungen aufgeteilt ist und auch nicht mit Löcher versehen ist.

Die Öffnung 24 am freien Ende 26 des Nietabschnitts 18 wird von einer zylindrischen Wand 28 begrenzt, deren unteres Ende in Fig. 1A eine Stanzkante 30 bildet. Wie ersichtlich ist das Nietelement 10 hier als Mutterelement ausgebildet und weist ein Innengewinde 32 auf, das zumindest im Wesentlichen koaxial zur mittleren Längsachse 12 verläuft, wobei die Öffnung 24 geringfügig kleiner als der Kerndurchmesser D3 ist, damit der durch den Nietabschnitt erzeugte Stanzbutzen problemlos durch das Innengewinde 32 hindurch entfernt werden kann, wie später näher erläutert wird.

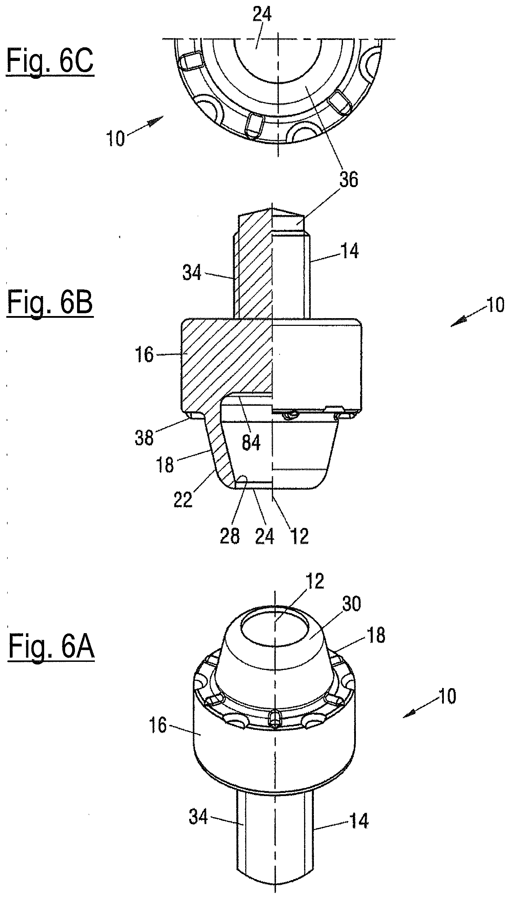

Alternativ hierzu könnte das Nietelement 10 als Bolzenelement realisiert werden, wie in den Fig. 6A bis 6C gezeigt ist. In dieser Ausführungsform wie auch in allen Ausführungsformen der Erfindung werden Bauteile, die gleich ausgebildet sind oder die gleiche Funktion erfüllen, mit den gleichen Bezugszeichen versehen und es versteht sich, dass die Beschreibung, von Merkmalen, die mit den gleichen Bezugszeichen gekennzeichnet sind, für alle Ausführungsformen gilt, wenn nicht etwas Gegenteiliges gesagt wird. Aus diesem Grunde wird die Beschreibung nicht unnötig wiederholt. In den Fig. 6A bis 6C sieht man, dass der Gewindezylinder 14 hier als männliches Gewinde 34 an einem Schaftteil 36 des Nietelements 10 ausgebildet ist, wobei das Schaftteil 36 von dem Körperteil 16 des Nietelements von der dem Nietabschnitt 18 abgewandten Seite 38 des Nietelements wegragt. Auch das Außengewinde 34 verläuft zumindest im Wesentlichen koaxial zur mittleren Längsachse 12. In diesem Beispiel kann die Öffnung 24 des Nietabschnitts im Durchmesser geringfügig größer sein als der Kerndurchmesser D3 des Gewindezylinders. Der Grund hierfür ist, dass der beim Einstanzen des Nietelements in ein Blechteil erzeugte Stanzbutzen durch die Öffnung 24 mittels des mittleren Pfostens der Matrize gezwängt werden kann, da es nicht entfernt, sondern zur Verstärkung der Anbindung des Nietbolzens an das Blechteil verwendet wird und zu diesem Zweck innerhalb des Nietabschnitts gegen den Boden des Körperteils gepresst bzw. gestaucht und im Durchmesser vergrößert wird.

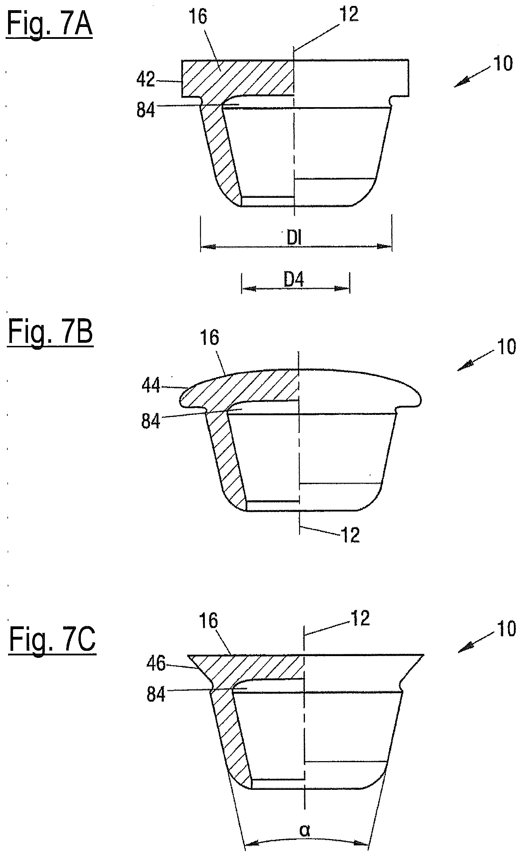

Als weiteres Beispiel für ein nicht erfindungsgemäßes selbststanzendes Nietelement 10 kann ein Nietelement 10 in Form eines Niets gemäß einem der Fig. 7A bis 7C genann werden. Ein solches Niet zeichnet sich dadurch aus, dass der hohle Nietabschnitt 18 im Bereich des Übergangs 40 an dem Körperteil 16 seinen größten Durchmesser D1 hat und eine geschlossene Umfangswand 22 aufweist, wobei der Nietabschnitt 18 an seinem freien Ende 26 seinen kleinsten Durchmesser D4 erreicht und dort eine kreisförmige Öffnung 24 aufweist, wobei die Verjüngung des Nietabschnitts 18 einen eingeschlossenen Winkel α mit der mittleren Längsachse 12 im Beriech zwischen 20° und 100°, vorzugsweise zwischen 30° und 60° und insbesondere zwischen 40° und 50° aufweist. Diese Winkelangaben gelten im Übrigen auch für den Nietabschnitt 18 der weiteren Ausführungsformen des Nietelements 10 aller Figuren.

Die Figuren 7A bis 7C zeigen drei verschiedenen Kopfformen für das erfindungsgemäße Niet. In Fig.7A ist der Körperteil bzw. Kopfteil 16 als flacher Zylinder 42 zu verstehen, in Fig. 7B ist der Körperteil 16 als gerundeter Kopfteil 44 ausgebildet, während in Fig. 7C der Körperteil als Senkkopf 46 ausgebildet ist.

In dem Ausführungsbeispiel gemäß den Fig. 1A bis C ist die Außenseite der Umfangswand 22 des Nietabschnitts 18 in einer Längsebene geschnitten gesehen, zumindest im Wesentlichen konvex gerundet.

In den weiteren Ausführungsbeispielen verläuft die Außenseite der Umfangswand 22 des Nietabschnitts 18 zumindest im Wesentlichen konusförmig.

In allen Ausführungsbeispielen weist die Umfangswand des Nietabschnitts bis auf den Übergang 40 in das Kopfteil und an seinem freien Ende 26 eine zumindest im Wesentlichen konstante Wanddicke auf. Dies ist allerdings nicht zwingend erforderlich, die Wanddicke könnte im oberen Bereich benachbart zum Übergang 40 in den Körperteil 16 mit Vorteil dicker gemacht werden als im Bereich seines freien Endes. Zwischen diesen Positionen könnte die Umfangswand progressiv dünner werden. Hierdurch wäre der Nietabschnitt im oberen Bereich steifer und somit innerhalb des Bauteils steif, was für das Durchstanzen des Bauteils günstiger ist und im unteren Bereich leichter verformbar, wodurch der Nietbördel leichter aus dem Bereich ausgebildet werden könnte, die aus dem Bauteil hinaus ragt.

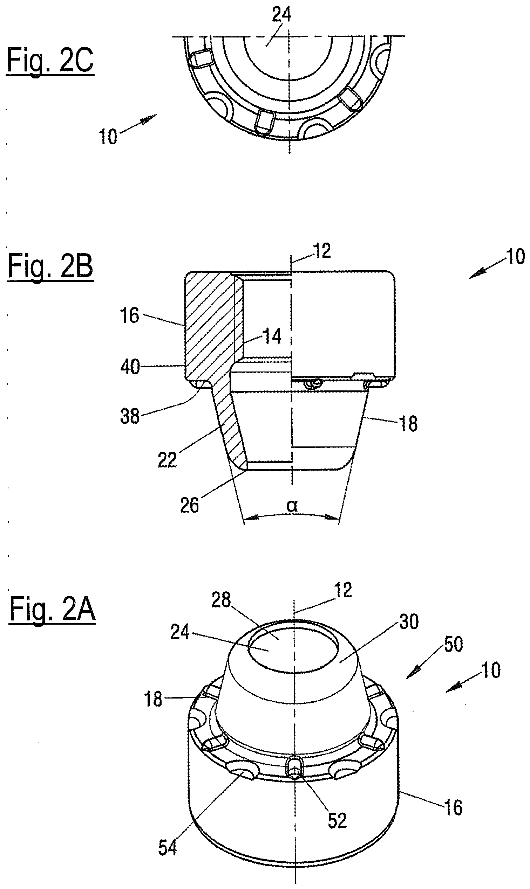

Das Nietelement ist vorzugsweise so ausgelegt, dass die Seite des Körperteils 16 benachbart zum Übergang 40 in den Nietabschnitt 18 als Flansch 48 ausgebildet ist und, mindestens bei einem Mutterelement gemäß Fig. 1A bis 1C bzw. Fig. 2A bis 2C oder bei einem Bolzenelement gemäß den Fig. 6A bis 6C mit Verdrehsicherungsmerkmalen 50, hier in der Form von Nasen 52 und Kerben 54, versehen ist. An dieser Stelle soll erwähnt werden, dass keine besonderen Forderungen an die Form des Körperteils gegeben sind. Beispielsweise könnte diese eine Formgebung wie bei einem RND-Element der Firma Profil Verbindungstechnik GmbH aufweisen, wie in der EP 1116891B gezeigt ist. Dort wird ein ballig ausgeführtes Kopfteil bzw. Körperteil mit einer axialen V-förmigen Nut versehen, die den Nietabschnitt umgibt und welche mit Verdrehsicherungsnasen an diskreten, gleichmäßig verteilten Stellen überbrückt ist.

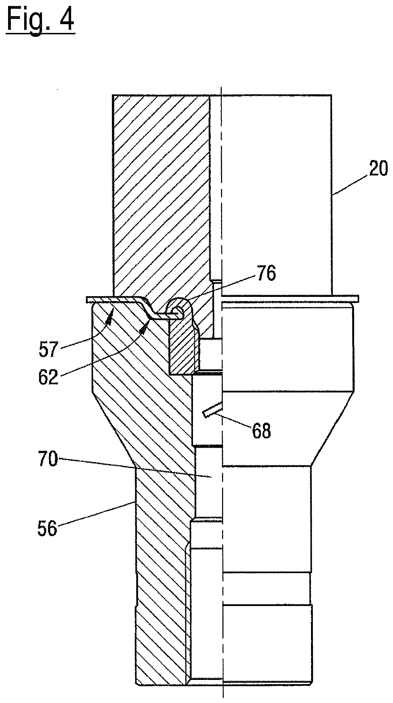

Das erfindungsgemäße Verfahren zum Anbringen eines Nietelements, hier in der Form des Nietelements gemäß den Fig. 1A bis 1C, an einem Bauteil 60 in der Form eines Blechteils wird nun mit Bezug auf die Fig. 3A bis 3H und 4 beschrieben. In diesem Verfahren stützt ein Setzkopf 56 das Nietelement 10 und ein Bauteil 60 in der Form eines Blechteils befindet sich oberhalb des Nietelements. Oberhalb des Blechteils befindet sich eine Matrize 20, wobei das Bauteil 60 gegen die Matrize gedruckt werden kann.

Wie in Fig.3A ersichtlich, hat der Setzkopf 56 einen Hohlraum 58 zur Aufnahme des Körperteils 16 des Nietelements 10. Oberhalb des Hohlraums 58 befindet sich eine Mulde in der Form einer Vertiefung 62, welche - wie später näher erläutert wird - der Ausbildung einer Sicke im Blechteil dient.

Die Vertiefung 62 geht in die flache Stirnseite 57 des Setzkopfes über. Der Setzkopf 56 ist in diesem Beispiel im unteren Werkzeug einer Presse (nicht gezeigt) untergebracht und kann in an sich bekannter Weise so ausgelegt werden, dass er Mutterelemente 10 nacheinander der Presse zuführt. Für jeden Hub der Presse wird ein Nietelement oder Mutterelement in ein Blechteil 60 oder in einer Kette von Blechteilen 60 in einem Folgeverbundwerkzeug eingebracht. Die Details der Presse sind für sich gut bekannt und werden der Einfachheit halber in der Zeichnung nicht gezeigt. Das Mutterelement ist hier mit dem Nietabschnitt 18 nach oben weisend angeordnet.

Oberhalb des Blechteils 60 und nach unten weisend befindet sich die Matrize 20, welche von einem oberen Werkzeug der Presse oder von einer Zwischenplatte der Presse (nicht gezeigt) getragen werden kann. Ebenfalls nicht gezeigt, jedoch häufig vorgesehen, ist ein gefederter Niederhalter, welcher den Setzkopf 56 umgeben und dazu dienen würde, das Blechteil gegen das Werkzeug der Presse zu drücken, das die Matrize 20 trägt.

Die Matrize hat einen zentralen Pfosten 64, der in sämtlichen Fig. 3A bis 3H und 4 zu sehen ist. In Fig. 3A ist die Situation gezeigt, in der die Presse geöffnet ist. Der zentrale Pfosten 64 ist mit einem zylindrischen Bereich 66 mit einem Außendurchmesser versehen, der dem Innendurchmesser D4 der Öffnung 24 entspricht.

Die weiteren Fig. 3B bis 3H zeigen verschiedene Phasen in der die Presse progressiv geschlossen wird. In Fig. 3B hat die Presse soweit geschlossen, dass der zentrale Pfosten 64 der Matrize 20 gegen die Oberseite des Blechteils 60 drückt und die Unterseite des Blechteils ist am freien oberen Ende des Nietabschnitts 18 abgestützt. Wenn die Presse weiter schließt, wird die Situation gemäß Fig. 3C erreicht in der der zentrale Pfosten 64 der Matrize 20 eine Stanzbutzen 68 aus dem Blechteil herausgestanzt hat, welcher nun durch den Gewindezylinder 14 des Mutterelements hindurchfällt und in die zentrale Passage 70 des Setzkopfes hineinfällt. In Fig. 3D hat der sich erweiternde Bereich 72 des zentralen Pfostens der Matrize 20 oberhalb des zylindrischen Bereiches 66 die Öffnung des Blechteils, die durch das Herausstanzen des Stanzbutzens 68 entstanden ist, wie auch das freie Ende 69 des Nietabschnitts 18 soweit aufgeweitet, dass sich das freie Ende 69 unterhalb des Randes 67 der aufgeweiteten Öffnung befindet und dagegen gepresst ist, wie aus Fig. 3D ersichtlich ist. Außerdem entnimmt man der Fig. 3D, dass der erhabene Ring 78, der die Vertiefung 74 der Matrize umgibt, sich ebenfalls in Berührung mit dem Blechteil befindet.

Bei weiterem Schließen der Presse drückt der Nietabschnitt 18 den Randbereich 67 de sich im Blechteil befindlichen Öffnung nach oben in die U-förmige Vertiefung 74 der Matrize 20, wie aus der Fig. 3E ersichtlich ist.

Bei noch weiterem Schließen der Presse gemäß Fig. 3F führt die U-förmige Vertiefung 74 der Matrize 20 dazu, dass das Blechteil auf sich selbst zurückgefaltet wird und gleichzeitig dafür sorgt, dass der Nietabschnitt 18 anfängt radial nach außen für die anfängliche Ausbildung des Nietbördels 76 gerollt zu werden.

Es ist anzumerken, dass das Blechteil nicht unbedingt im Randbereich 67 der aufgeweiteten Öffnung des Blechteils auf sich selbst zurückgefaltet sein muss. Falls das Blechteil relativ dicker ist als in der Zeichnung gezeigt oder von höherer Festigkeit ist, dann tritt nicht zwangsläufig eine Zurückfaltung des Blechteils im Randbereich 67 ein.

In Fig. 3G ist die Ausbildung des Nietbördels 76 weiter fortgeschritten und gleichzeitig hat der erhabene Ringbereich 78 der Matrize 20 angefangen, das Blechteil 20 in die Vertiefung 62 des Setzkopfes 56 einzudrücken und gegen die Stirnseite 57 des Setzkopfes anzudrücken. So wie in Fig. 3G gezeigt, ist die Anbringungsarbeit beinahe vollendet.

In Fig. 3H ist der Einpressvorgang beendet, der Ringbereich 78 der Matrize 20 hat das Blechteil in die Vertiefung 62 des Setzkopfes hineingepresst, wodurch die Ausbildung der Sicke 80 vollendet ist und der Nietabschnitt in den fertigen Nietbördel 76 gebracht ist, wobei der Nietbördel 76 innerhalb der hohlen Seite der Sicke angeordnet ist. Das Körperteil 16 des Nietelements sitzt auf der erhabenen Seite der Sicke, d.h. auf der Unterseite in Fig. 3H.

Es ist anzumerken, dass der Stanzbutzen 68, welcher durch die Schneidwirkung zwischen dem freien Ende 26 des Nietabschnitts 18 und dem zentralen Pfosten 64 der Matrize 20 und das Hineindrücken des zentralen Pfostens 64 in den Nietabschnitt entsteht, fällt (wie in Fig. 3C gezeigt) durch den Gewindezylinder 14 des Nietelements 10 und in die mittlere Passage 70 des Setzkopfes durch die Wirkung der Schwerkraft oder wahlweise mit Hilfe eines Druckluftstoßes, welcher durch die mittlere Passage der Matrize zugeführt werden kann.

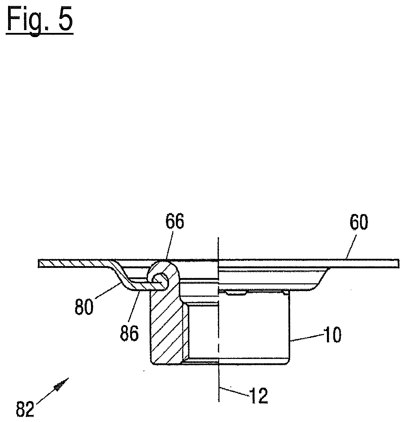

Aus der Zeichnung ist ersichtlich, dass der zylindrische Bereich 68 des mittleren Pfostens 64 vom Bereich 72 gefolgt wird, welcher vom zylindrischen Bereich 68 weg von diesem divergiert und für die Aufweitung des hohlen Nietabschnitts sorgt. Der divergierende Bereich des zentralen Pfostens geht in eine U-förmige Vertiefung 74 über, welche nach dem Durchstanzen des Bauteils und der Aufweitung des Nietabschnitts durch weitere Druckausübung auf die Matrize den Nietabschnitt 18 in ein Nietbördel 76 formt, welches in fertiggestellter Form des Zusammenbauteils in den Fig. 4 und 5 ersichtlich ist.

Eine wichtige Überlegung für die Existenz der vorliegenden Erfindung liegt darin, dass das Nietelement 10 und insbesondere dessen Nietabschnitt 18 zuerst als Lochmatrize für das Ausstanzen des Loches im Blechteil dient und mit dem zentralen Pfosten der Matrize 20 zusammenarbeitet, der als Stempel für das Ausstanzen der Loches anstelle als Matrize 20 arbeitet. Nach dem Ausstanzen des Loches im Blechteil übernimmt die Matrize die gewöhnliche Rolle einer Matrize, d.h. die Umformung des Nietabschnitts in ein Nietbördel.

Ferner sieht man aus den Fig. 3 und 4, dass die U-förmige Vertiefung 74 auf seiner radial äußeren Seite in eine der Vertiefung 74 umgehende Ringerhebung 78 übergeht, die mit der Mulde 62 des Setzkopfes für die Ausbildung der Sicke 80 des Blechteils 60 (in Fig. 5 gut ersichtlich) sorgt. Durch die Ausübung von Drück auf die Matrize 20 presst die Ringerhebung 78 der Matrize 20 das Blechteil 60 in die Mulde 62 des abgestützten Setzkopfes 56. So wird das Blechteil in die Form einer Sicke 80 umgeformt, die in Fig.4 die Mulde 62 auskleidet.

Das Ergebnis der Arbeit in der Presse ist das Zusammenbauteil 82 gemäß Fig. 5, wobei diese Figur eine Seitenansicht und einen Halbschnitt des Zusammenbauteils zeigt. Wenn hier von einem Bauteil gesprochen wird, liegt dieses üblicherweise in der Form eines Blechteils vor. Es ist allerdings nicht ausgeschlossen, dass das Bauteil 60 aus einem Kunststoffmaterial besteht, beispielsweise aus einem Faserverbundmaterial, das ebenfalls in Frage kommt und mit dem erfindungsgemäßen Nietelement durchstanzt werden kann und zwar insbesondere dann, wenn geeignete Maßnahmen ergriffen werden das Kunststoffmaterial zu erwärmen um es weich er zu machen.

Das Zusammenbauteil 82 besteht aus dem Nietelement 10 in Kombination mit einem Bauteil 60, insbesondere einem metallischen Bauteil bzw. einem Blechteil, wobei bei der Ausbildung als Mutterelement das durch die selbststanzende Einbringung des Nietelements 10 der im Bereich der Öffnung 24 entstandene Stanzbutzen 68 durch den hohlen Gewindezylinder 14 entsorgt ist und bei der Ausbildung als Bolzenelement oder als Niet der im Bereich der Öffnung entstandene Stanzbutzen 68 im hohlen Nietabschnitt 18 benachbart zum Boden 84 des Körperteils 16 verstaucht untergebracht ist (nicht gezeigt).

Der zu einem Nietbördel 76 umgeformte Nietabschnitt 18 liegt auf der dem Körperteil 16 abgewandten Seite des Blechteils 60 und bildet mit dem Flansch bzw. mit der Unterseite des Körperteils eine U-förmige Aufnahme, in der das Blechteil 60 im ringförmigen Randbereich 67 der durch den Nietabschnitt bewirkte Lochung eingeklemmt ist.

Wie ebenfalls aus der Fig. 5 ersichtlich, ist der zu einem Nietbördel 76 umgeformte Nietabschnitt 18 des Nietelements 10 in einer Sicke 82 des Bauteils untergebracht, d.h. der Körperteil 16 des Nietelements 10 sitzt auf der erhabenen Seite 86 der Sicke.

Es versteht sich, dass die Verarbeitung des Stanzbolzens gemäß den Fig. 6A bis 6C und der selbststanzenden Nietelemente gemäß den Fig. 7A bis 7C analog abläuft wie für die Mutterelemente in Bezug auf die Fig. 3 und 4 beschrieben ist.

Ferner soll darauf hingewiesen, dass die Anordnung des Setzkopfes 56 in dem unteren Werkzeug einer Presse und die Anordnung der Matrize im oberen Werkzeug einer Presse keinesfalls zwingend erforderlich ist. Der Setzkopf 56 könnte genauso gut nach oben weisend an der Zwischenplatte einer Presse und die Matrize nach unten weisend an dem oberen Werkzeug einer Presse angeordnet werden. Alternativ hierzu könnte der Setzkopf nach unten weisend am oberen Werkzeug einer Presse oder an der Zwischenplatte einer Presse montiert werden, wobei dann die Matrize nach oben weisend in der Zwischenplatte der Presse bzw. in dem unteren Werkzeug der Presse untergebracht wird. Bei der Verwendung einer mit Kraft betriebenen Zange wird der Setzkopf von einem Arm der Zange getragen, während die Matrize am anderen Arm angebracht ist. Bei der Verwendung eines Roboters könnte dieser entweder den Setzkopf oder die Matrize tragen und dieser bzw. diese gegen das jeweils andere fest montierte Teil, d.h. die Matrize bzw. den Setzkopf, drücken.

Schließlich wird darauf hingewiesen, dass sich, wenn in dieser Anmeldung von oben oder von unten oder von anderen geometrischen Bezeichnungen gesprochen wird, dies stets auf die in den Zeichnungen dargestellten Ausführungen bezieht und keinesfalls als Einschränkung zu verstehen ist.

### Bezugszeichenliste

- 10: Nietelement
- 12: mittlere Längsachse des Nietelements
- 14: Gewindezylinder
- 16: Körperteil des Nietelements
- 18: Nietabschnitt des Nietelements
- 20: Matrize
- 22: Umfangswand des Nietabschnitts
- 24: Öffnung
- 26: freies Ende des Nietabschnitts
- 28: zylindrische Wand
- 30: Stanzkante
- 32: Innengewinde eines Mutterelements
- 34: Außengewinde, männliches Gewinde
- 36: Schaftteil des Nietelements
- 38: Seite des Körperteils des Nietelements 10
- 40: Übergang des Nietabschnitts in den Körperteil 16
- 42: Kopfteil bzw. Körperteil in der Form eines flachen Zylinders,
- 44: Körperteil in der Form eines gerundeten Kopfteils
- 46: Körperteil in der Form eines Senkkopfes
- 48: Flansch
- 50: Verdrehsicherungsmerkmale
- 52: Nasen
- 54: halbkreisförmige Kerben
- 56: Setzkopf
- 57: flache Stirnseite des Setzkopfes 56
- 58: Hohlraum des Setzkopfes
- 60: Bauteil
- 62: Mulde des Setzkopfes
- 64: mittlerer Pfosten der Matrize
- 66: zylindrischer Bereich des mittleren Pfostens der Matrize
- 67: Rand des in das Blechteil 60 gestanzten Loches
- 68: Stanzbutzen
- 69: freies Ende des Nietabschnitts 18
- 70: mittlere Passage des Setzkopfes 56
- 72: divergierender Bereich der Matrize
- 74: U-förmige Vertiefung der Matrize 20
- 76: Nietbördel
- 78: Ringerhebung der Matrize
- 80: Sicke
- 82: Zusammenbauteil
- 84: Boden des Körperteils 16
- 86: erhabene Seite der Sicke 80
- D1: Durchmesser des Nietabschnitts benachbart zum Körperteil
- D2: Außendurchmesser des Gewindezylinders
- D3: Kerndurchmesser des Gewindezylinders
- D4: Durchmesser der Öffnung 24
- α: eingeschlossener Winkel des konusförmigen Nietabschnitts

## Patentansprüche

1. Selbststanzendes Nietelement (10) mit einer mittleren Längsachse (12), mit einem einen Gewindezylinder (14) aufweisendes Körperteil (16) und mit einem hohlen Nietabschnitt (18) zum Eindrücken in ein ungelochtes metallisches Bauteil bzw. Blechteil (60), wobei der Nietabschnitt (18) zumindest bereichsweise als mittels einer Matrize (20) aufweitbarer, sich in Richtung der mittleren Längsachse (12) und vom Körperteil (16) weg verjüngend ausgebildet ist, wobei der hohle Nietabschnitt (18) im Bereich des Übergangs an den Körperteil (16) einen Durchmesser (D1) größer als der des Außendurchmessers des Gewindezylinders (D2) sowie eine geschlossene Umfangswand (22) und an seinem freien Ende (26) eine Öffnung (24) aufweist,
**dadurch gekennzeichnet,**
**dass** das Nietelement (10) ein Mutterelement mit einem Innengewinde (14) ist, das zumindest im Wesentlichen koaxial zur mittleren Längsachse (12) verläuft, und
**dass** ein Durchmesser (D4) der Öffnung (24) geringfügig kleiner als ein Kerndurchmesser (D3) des Gewindezylinders (14) ist.

2. Selbststanzendes Nietelement (10) nach Anspruch 1,
**dadurch gekennzeichnet,**
**dass** der hohle Nietabschnitt (18) im Bereich des Übergangs an den Körperteil (16) seinen größten Durchmesser hat (D1) aufweist, wobei der Nietabschnitt (18) an seinem freien Ende (26) seinen kleinsten Durchmesser (D3) erreicht und dort eine kreisförmige Öffnung (24) aufweist, wobei die Verjüngung des Nietabschnitts (18) einen eingeschlossenen Winkel im Bereich zwischen 20° und 100°, vorzugsweise zwischen 30° und 60° und insbesondere zwischen 40° und 50° aufweist.

3. Nietelement (10) nach einem der vorhergehenden Ansprüche,
**dadurch gekennzeichnet, dass** die Außenseite der Umfangswand (22) des Nietabschnitts zumindest im Wesentlichen konusförmig verläuft.

4. Nietelement (10) nach einem der vorhergehenden Ansprüche 1 bis 2, **dadurch gekennzeichnet, dass** die Außenseite der Umfangswand (22) des Nietabschnitts (18) in einer Längsebene geschnitten zumindest im Wesentlichen konvex gerundet ist.

5. Nietelement (10) nach einem der vorhergehenden Ansprüche,
**dadurch gekennzeichnet, dass** die Umfangswand (22) des Nietabschnitts (18) bis auf den Übergang in das Körperteil (16) und bis an seinem freien Ende (26) eine zumindest im Wesentlichen konstante Wanddicke aufweist.

6. Nietelement (10) nach einem der vorhergehenden Ansprüche,
**dadurch gekennzeichnet, dass** die Seite (38) des Körperteils (16) benachbart zum Übergang in den Nietabschnitt (18) als Flansch (47) ausgebildet und ggf. mit Verdrehsicherungsmerkmalen (50) versehen ist.

7. Zusammenbauteil (82) bestehend aus einem Nietelement (10) nach einem der vorhergehenden Ansprüche 1 bis 6 in Kombination einem metallischen Bauteil bzw. einem Blechteil (60), wobei bei der Ausbildung als Mutterelement der durch die selbststanzende Einbringung des Nietelements (10) im Bereich der Öffnung (24) entstandene Stanzbutzen (68) durch den hohlen Gewindezylinder (14) entsorgt ist.

8. Zusammenbauteil (82) nach dem Anspruch 7,
**dadurch gekennzeichnet, dass** der zu einem Nietbördel (76) umgeformte Nietabschnitt (18) des Nietelements in einer Sicke (80) des Bauteils (60) untergebracht ist, d.h. der Körperteil (16) des Nietelements auf der erhabenen Seite der Sicke (80) sitzt.

9. Verfahren zum Anbringen eines Nietelements (10) nach einem der vorhergehenden Ansprüche 1 bis 6 an einem metallischen Bauteil bzw. Blechteil (60), unter Anwendung einer Matrize (20) die auf der anderen Seite des Bauteils angeordnet wird,
**dadurch gekennzeichnet, dass** die Matrize (20) einen mittleren Pfosten (70) mit einem zylindrischen Bereich (66) mit einem Außendurchmesser versehen ist, die dem Innendurchmesser (D4) der Öffnung (24) entspricht und mit diesem bei der Ausübung von Druck auf das Nietelement (10) in Richtung auf das Bauteil (60) und die Matrize (20) zugehend für das Ausstanzen eines Stanzbutzens (68) sorgt, die innerhalb des Nietabschnitts (18) gedrückt wird, dass der zylindrische Bereich (66) des mittleren Pfostens (70) von einem im Durchmesser vom zylindrischen Bereich (66) weg divergierenden Bereich (72) gefolgt ist, der für eine Aufweitung des hohlen Nietabschnitts (18) sorgt, und dass der divergierende Bereich (72) des mittleren Pfostens (70) in einen U-förmigen Vertiefung (74) übergeht, der nach dem Durchstanzen des Bauteils (60) und der Aufweitung des Nietabschnitts (18) durch weitere Druckausübung auf dem Nietelement (10) den Nietabschnitt (18) zu einem Nietbördel (76) umformt.

10. Verfahren nach Anspruch 9,
**dadurch gekennzeichnet, dass** der Körperteil (16) des Nietelements (10) in einem Hohlraum (58) eines Setzkopfes (56) untergebracht ist, der über eine Vertiefung in Form einer eine Sicke (80) bildende Mulde (62) in die flache Stirnseite (57) des Setzkopfes (56) übergeht, wodurch durch die Ausübung von Drück auf das Nietelement (10) mittels des Setzkopfes (56) das Bauteil (60) in die Form einer Sicke (80) umgeformt wird.

11. Verfahren nach Anspruch 10,
**dadurch gekennzeichnet, dass** die U-förmige Vertiefung (74) auf seiner radial äußeren Seite in einer der Vertiefung (74) umgehende Ringerhebung (78) übergeht, die mit der Mulde (62) des Setzkopfes (56) für die Ausbildung der Sicke (80) sorgt.

12. Matrize (20) zur Anbringung eines Nietelements (10) nach einem der vorhergehenden Patentansprüche 1 bis 6 in ein metallisches Bauteil bzw. Blechteil (60), insbesondere zur Anwendung in einem Verfahren nach den Ansprüchen 9, 10 oder 11,
**dadurch gekennzeichnet, dass** das die Matrize (20) einen mittleren Pfosten (64) mit einem zylindrischen Bereich (66) mit einem Außendurchmesser versehen ist, die dem Innendurchmesser (D4) der Öffnung (24) des Nietabschnitts (18) des Nietelements (10) entspricht und mit diesem bei der Ausübung von Druck auf das Nietelement (10) in Richtung auf das Bauteil (60) und die Matrize (20) zugehend für das Ausstanzen eines Stanzbutzens (68) sorgt, dass der zylindrische Bereich (66) des mittleren Pfostens (64) mit einem von einem im Durchmesser vom zylindrischen Bereich (66) weg divergierenden Bereich (72) gefolgt ist, der für eine Aufweitung des hohlen Nietabschnitts (18) sorgt, und dass der divergierende Bereich (72) des mittleren Pfostens (64) in eine U-förmige Vertiefung (74) übergeht, die nach dem Durchstanzen des Bauteils (60) und der Aufweitung des Nietabschnitts (18) durch weitere Druckausübung auf das Nietelement (10) den Nietabschnitt (18) zu einem Nietbördel (76) umformt.

13. Matrize (20) nach Anspruch 12,
**dadurch gekennzeichnet, dass** die U-förmige Vertiefung (74) auf seiner radial äußeren Seite in eine der Vertiefung (74) umgehende Ringerhebung (78) übergeht.

## Claims

1. A self-piercing rivet element (10) having a central longitudinal axis (12), a body part (16) with a thread cylinder (14) and a hollow rivet section (18) for being pressed into a non-pre-pierced metallic component or sheet metal part (60), wherein the rivet section (18) is formed to be dilated at least regionally by means of a die button (20) and tapers in the direction of the central longitudinal axis (12) and away from the body part (16), wherein the hollow rivet section (18) has a diameter (D1) in the region of the transition into the body part (16) which is larger than the outer diameter of the thread cylinder (D2) and has a closed peripheral wall (22) and also has an opening (24) at its free end (26),
**characterized in that**
the rivet element (10) is a nut element having an internal thread (14) which extends at least substantially coaxially to the central longitudinal axis (12), and
**in that** a diameter (D4) of the opening (24) is fractionally smaller than a core diameter (D3) of the thread cylinder (14).

2. A self-piercing rivet element (10) in accordance with claim 1, **characterized in that**
the hollow rivet section (18) has its largest diameter (D1) in the region of the transition to the body part (16), with the rivet section (18) reaching its smallest diameter (D3) at its free end (26) and there having a circular opening (24), with the taper of the rivet section (18) having an enclosed angle in the range between 20° and 100°, preferably between 30° and 60° and in particular between 40° and 50°.

3. A rivet element (10) in accordance with one of the preceding claims, **characterized in that** the outer side of the peripheral wall (22) of the rivet section extends at least substantially conically.

4. A rivet element (10) in accordance with one of the preceding claims 1 to 2, **characterized in that** the outer side of the peripheral wall (22) of the rivet section (18) is at least substantially convexly rounded when sectioned in a longitudinal plane.

5. A rivet element (10) in accordance with any one of the preceding claims, **characterized in that** the peripheral wall (22) of the rivet section (18) has an at least substantially constant wall thickness up to its free end (26), apart from the transition into the body part (16).

6. A rivet element (10) in accordance with any one of the preceding claims, **characterized in that** the side (38) of the body part (16) adjacent to the transition into the rivet section (18) is formed as a flange (47) and is optionally provided with features (50) providing security against rotation.

7. A component assembly (82) comprising a rivet element (10) in accordance with any one of the preceding claims 1 to 6 in combination with a metallic component or a sheet metal part (60), wherein when designed as a nut element, the piercing slug (68) arising through the self-piercing introduction of the rivet element (10) in the region of the opening (24) is disposed of through the hollow thread cylinder (14).

8. A component assembly (82) in accordance with claim 7,
**characterized in that** the rivet section (18) of the rivet element formed into a rivet bead (76) is accommodated in a boss (80) of the component (60), i.e. the body part (16) of the rivet element sits on the raised side of the boss (80).

9. A method for the attachment of a rivet element (10) in accordance with any one of the preceding claims 1 to 6 to a metallic component or a sheet metal part (60) using a die button (20) which is arranged on the other side of the component,
**characterized in that** the die button (20) is provided with a central post (70) having a cylindrical region (66) with an outer diameter which corresponds to the inner diameter (D4) of the opening (24) and with which, on the exertion of pressure onto the rivet element (10) in the direction towards the component (60) and the die button (20), serves for the piercing of a slug (68) which is pressed into the rivet section (18), **in that** the cylindrical region (66) of the central post (70) is followed by a region (72) which diverges in diameter away from the cylindrical region (66) and which serves for a dilation of the hollow rivet section (18), and **in that** the divergent region (72) of the central post (70) merges into a U-shaped recess (74) which, after the piercing of the component (60) and the dilation of the rivet section (18), shapes the rivet section (18) into a rivet bead (76) by the exertion of further pressure on the rivet element (10).

10. A method in accordance with claim 9,
**characterized in that** the body part (16) of the rivet element (10) is accommodated in a hollow cavity (58) of a setting head (56) which merges via a depression (62) forming a boss (80) into the flat end face (57) of the setting head (56), whereby, by the exertion of pressure onto the rivet element (10), the component (60) is reshaped into the form of a boss (80) by means of the setting head (56).

11. A method in accordance with claim 10, **characterized in that** the U-shaped recess (74) merges at its radially outer side into a raised ring (78) surrounding the recess (74), with the raised ring (78) together with the depression (62) of the setting head (56) serving for the formation of the boss (80).

12. A die button (20) for the attachment of a rivet element (10) in accordance with any one of the preceding claims 1 to 6 to a metallic component or sheet metal part (60), in particular for use in a method in accordance with any one of the claims 9, 10 or 11,
**characterized in that** the die button (20) is provided with a central post (64) having a cylindrical region (66) provided with an outer diameter which corresponds to the inner diameter (D4) of the opening (24) of the rivet section (18) of the rivet element (10) and with which, on the exertion of pressure on the rivet element (10) in the direction towards the component (60) and the die button (20), serves for the punching out of a slug (68), **in that** the cylindrical region (66) of the central post (64) is followed by a region (72) which diverges in diameter away from the cylindrical region (66) and which serves for a dilation of the hollow rivet section (18), and **in that** the divergent region (72) of the central post (64) merges into a U-shaped recess (74) which, after the piercing of the component (60) and the dilation of the rivet section (18), shapes the rivet section (18) into a rivet bead (76) by the exertion of further pressure on the rivet element (10).

13. A die button (20) in accordance with claim 12,
**characterized in that** the U-shaped recess (74) merges at its radially outer side into a raised ring (78) surrounding the recess (74).

## Revendications

1. Elément rivet auto-perforant (10) comprenant un axe longitudinal central (12), une partie de corps (16) présentant un cylindre taraudé (14), et un tronçon de rivet creux (18) destiné à être enfoncé dans un composant métallique ou une pièce en tôle non perforé(e) (60), le tronçon de rivet (18) étant réalisé au moins localement de manière à pouvoir être évasé au moyen d'une matrice (20) et à se rétrécir en direction de l'axe longitudinal central (12) en éloignement de la partie de corps (16), le tronçon de rivet creux (18) présentant, au niveau de la transition vers la partie de corps (16), un diamètre (D1) supérieur au diamètre extérieur du cylindre taraudé (D2), ainsi qu'une paroi périphérique fermée (22), et, à son extrémité libre (26), une ouverture (24),
**caractérisé en ce que**
l'élément rivet (10) est un élément écrou ayant un taraudage (14) qui est au moins sensiblement coaxial à l'axe longitudinal central (12), et
**en ce qu'**un diamètre (D4) de l'ouverture (24) est légèrement inférieur à un diamètre de coeur (D3) du cylindre taraudé (14).

2. Elément rivet auto-perforant (10) selon la revendication 1,
**caractérisé en ce que**
le tronçon de rivet creux (18) a son plus grand diamètre (D1) au niveau de la transition vers la partie de corps (16), le tronçon de rivet (18) ayant son plus petit diamètre (D3) à son extrémité libre (26) et présentant à cet endroit une ouverture circulaire (24), le rétrécissement du tronçon de rivet (18) présentant un angle inclus dans la plage comprise entre 20° et 100°, de préférence entre 30° et 60°, et en particulier entre 40° et 50°.

3. Elément rivet (10) selon l'une des revendications précédentes,
**caractérisé en ce que** la face extérieure de la paroi périphérique (22) du tronçon de rivet est au moins sensiblement conique.

4. Elément rivet (10) selon l'une des revendications précédentes 1 à 2,
**caractérisé en ce que** la face extérieure de la paroi périphérique (22) du tronçon de rivet (18), coupée dans un plan longitudinal, est arquée de manière au moins sensiblement convexe.

5. Elément rivet (10) selon l'une des revendications précédentes,
**caractérisé en ce que** la paroi périphérique (22) du tronçon de rivet (18) présente une épaisseur de paroi au moins sensiblement constante, exception faite de la transition vers la partie de corps (16) et de son extrémité libre (26).

6. Elément rivet (10) selon l'une des revendications précédentes,
**caractérisé en ce que** la face (38) de la partie de corps (16) adjacente à la transition vers le tronçon de rivet (18) est réalisée sous forme de bride (47) et est éventuellement pourvue de caractéristiques anti-rotation (50).

7. Pièce d'assemblage (82) constituée d'un élément rivet (10) selon l'une des revendications précédentes 1 à 6 en combinaison avec un composant métallique ou une pièce en tôle (60),
dans laquelle, lors de la réalisation en tant qu'élément écrou, la pastille de poinçonnage (68) résultant de l'insertion auto-perforant de l'élément rivet (10) dans la zone de l'ouverture (24) est éliminée par le cylindre taraudé creux (14).

8. Pièce d'assemblage (82) selon la revendication 7,
**caractérisée en ce que** le tronçon de rivet (18) de l'élément rivet, transformé en un collet rabattu (76), est logé dans une moulure (80) du composant (60), c'est-à-dire que la partie de corps (16) de l'élément rivet est placée sur le côté surélevé de la moulure (80).

9. Procédé de pose d'un élément rivet (10) selon l'une des revendications précédentes 1 à 6 sur un composant métallique ou une pièce en tôle (60) en utilisant une matrice (20) qui est placée de l'autre côté du composant, **caractérisé en ce que** la matrice (20) est munie d'un montant central (70), ayant une zone cylindrique (66) avec un diamètre extérieur qui correspond au diamètre intérieur (D4) de l'ouverture (24), avec laquelle, lors de l'application d'une pression sur l'élément rivet (10) en direction allant vers le composant (60) et la matrice (20), elle assure le poinçonnage d'une pastille de poinçonnage (68) qui est pressée à l'intérieur du tronçon de rivet (18), **en ce que** la zone cylindrique (66) du montant central (70) est suivie d'une zone (72) divergeant en diamètre à partir de la zone cylindrique (66), qui assure un évasement du tronçon de rivet creux (18),
et **en ce que** la zone divergente (72) du montant central (70) se prolonge par un renfoncement (74) en forme de U qui, une fois que le composant (60) est perforé et que le tronçon de rivet (18) est évasé, transforme le tronçon de rivet (18) en un collet rabattu (76) en exerçant une pression supplémentaire sur l'élément rivet (10).

10. Procédé selon la revendication 9,
**caractérisé en ce que** la partie de corps (16) de l'élément rivet (10) est logée dans une cavité (58) d'une tête de pose (56) qui se prolonge par la face frontale plate (57) de la tête de pose (56) par l'intermédiaire d'un renfoncement sous la forme d'un creux (62) formant une moulure (80), moyennant quoi, en exerçant une pression sur l'élément rivet (10) au moyen de la tête de pose (56), le composant (60) est déformé en forme de moulure (80).

11. Procédé selon la revendication 10,
**caractérisé en ce que** le renfoncement (74) en forme de U se prolonge, sur son côté radialement extérieur, par une élévation annulaire (78) entourant le renfoncement (74), qui assure avec le creux (62) de la tête de pose (56) la formation de la moulure (80).

12. Matrice (20) destinée à monter un élément rivet (10) selon l'une des revendications précédentes 1 à 6 dans un composant métallique ou une pièce de tôle (60), en particulier destinée à être utilisée dans un procédé selon les revendications 9, 10 ou 11,
**caractérisée en ce que** la matrice (20) est munie d'un montant central (64), ayant une zone cylindrique (66) avec un diamètre extérieur qui correspond au diamètre intérieur (D4) de l'ouverture (24) du tronçon de rivet (18) de l'élément rivet (10), avec laquelle elle assure le poinçonnage d'une pastille de poinçonnage (68) lors de l'application d'une pression sur l'élément rivet (10) en direction allant vers le composant (60) et la matrice (20),
**en ce que** la zone cylindrique (66) du montant central (64) est suivie d'une zone (72) divergeant en diamètre à partir de la zone cylindrique (66), qui assure un évasement du tronçon de rivet creux (18),
et **en ce que** la zone divergente (72) du montant central (64) se prolonge par un renfoncement (74) en forme de U qui, une fois que le composant (60) est perforé et que le tronçon de rivet (18) est évasé, transforme le tronçon de rivet (18) en un collet rabattu (76) en exerçant une pression supplémentaire sur l'élément rivet (10).

13. Matrice (20) selon la revendication 12,
**caractérisée en ce que** le renfoncement en forme de U (74) se prolonge, sur son côté radialement extérieur, par une élévation annulaire (78) entourant le renfoncement (74).
